# EUROPÄISCHE PATENTSCHRIFT

(11) **EP 3 736 033 B1**
(45) Veröffentlichungstag und Bekanntmachung des Hinweises auf die Patenterteilung: **23.03.2022**
(21) Anmeldenummer: 20176555.9
(22) Anmeldetag: 12.01.2016
(51) Int. Cl.: B01D 35/153

(54) **FILTERVORRICHTUNG**
FILTER DEVICE
DISPOSITIF FILTRANT

(30) Priorität: 19.03.2015 DE 102015003606; 19.03.2015 DE 102015003604
(43) Veröffentlichungstag der Anmeldung: 11.11.2020
(62) Teilanmeldung aus: 16700320.1
(73) Patentinhaber: Hydac Filtertechnik GmbH, 66280 Sulzbach/Saar (DE)
(72) Erfinder: Klein, Volkmar, 66482 Zweibrücken (DE); Sakraschinsky, Michael, 66386 St. Ingbert (DE)
(74) Vertreter: Bartels und Partner, Patentanwälte

(56) Entgegenhaltungen:
- DE-A1-102007 056 362
- DE-A1-102010 049 975
- DE-A1-102010 063 822
- US-A- 4 654 140

## Beschreibung

Die Erfindung betrifft eine Filtervorrichtung mit den Merkmalen im Oberbegriff von Anspruch 1.

Filtervorrichtungen dieser Art sind Stand der Technik und sind in einer Vielzahl von Ausführungsformen auf dem Markt frei erhältlich. Um nur ein Beispiel aus der großen Anzahl bekannter, derartiger Vorrichtungen zu nennen, sei beispielhaft auf die EP 2 249 941 B1 verwiesen. Wenn Filtervorrichtungen dieser Art bei technischen Anlagen, wie Hydrauliksystemen, benutzt werden, hängt die Betriebssicherheit der zugehörigen Anlage weitgehend von der Funktionsfähigkeit der Filtervorrichtung ab. Um zu vermeiden, dass es bei einem Verblocken des Filterelements, bei dem dessen Filtermaterial mit aus dem Fluid abgereinigten Schmutzpartikeln überfrachtet ist, zu einer schwerwiegenden Betriebsstörung kommt, bildet die Bypass-Ventileinrichtung eine Art Sicherheitseinrichtung, die als Notmaßnahme einen das verblockte Filtermaterial umgehenden Fluidweg zur Verfügung stellt. In Anbetracht der großen Stückzahlen, in denen solche Filtervorrichtungen zum Einsatz kommen, stellen die für derartige Filtervorrichtungen anfallenden Herstellungskosten einen bedeutenden wirtschaftlichen Faktor dar.

Die DE 10 2010 063 822 A1 beschreibt eine Filtervorrichtung mit den Merkmalen im Oberbegriff von Anspruch 1 mit einem einen Filterkopf, einen Filtertopf und ein abnehmbares Gehäuse-Deckelteil aufweisenden Filtergehäuse, das ein Filterelement aufnimmt, das eine Unfiltratseite von einer Filtratseite separiert, und mit einer Bypass-Ventileinrichtung, die ein Ventilschließglied aufweist, das durch eine Schließfeder in eine an einem Ventilsitzteil anliegende Schließstellung vorgespannt ist und bei verblocktem Filterelement in eine Stellung gelangt, in der es unter Umgehung des Filterelements einen Fluidweg von der Unfiltratseite zur Filtratseite freigibt, wobei das Ventilschließglied und die Schließfeder am Deckelteil angeordnet sind und das Ventilsitzteil sich an einer Elementkappe des Filterelements befindet, die ein eine Einfassung für das dem Deckelteil zugewandte Ende des Filtermaterials des Filterelements bildendes Aufnahmeteil aufweist.

Weitere Filtervorrichtungen gehen aus der DE 10 2007 056 362 A1 und der DE 10 2010 049 975 A1 hervor.

Ein Druckindikator wird in der US 4 654 140 offenbart.

Im Hinblick auf diese Problematik stellt sich die Erfindung die Aufgabe, eine Filtervorrichtung der eingangs genannten Gattung zur Verfügung zu stellen, die sich durch eine einfache, besonders kostengünstig herstellbare Bauweise auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass den Außenumfang des kreisringförmigen Aufnahmeteils der Elementkappe ein Kranz aus gleichmäßig verteilten Stegen umgibt, die plattenartig gebildet sind und sich mit ihren Ebenen in Radialrichtung erstrecken und die Träger für eine kreisringförmige Aufnahmekrone bilden, die sich in einem axialen Abstand vom Aufnahmeteil sowie in einem radialen Abstand von der Außenseite des übrigen Filterelements befindet.

Es ist ferner vorgesehen, dass das Ventilschließglied und die Schließfeder am Deckelteil angeordnet sind und das Ventilsitzteil sich an einer Elementkappe des Filterelements befindet, die ein eine Einfassung für das dem Deckelteil zugewandte Ende des Filterelements bildendes Aufnahmeteil aufweist. Dadurch, dass das Ventilsitzteil an einer Elementkappe des Filterelements gebildet ist, lässt sich die Bypass-Ventileinrichtung in einfacher Weise mit geringem Werkstoffaufwand realisieren. Da bei derartigen Filtervorrichtungen ein nicht unbedeutender Anteil der Herstellungskosten auf die Ausbildung der Bypass-Ventileinrichtung entfällt, lässt sich die Gesamt-Filtervorrichtung entsprechend kostengünstig herstellen.

Bei besonders vorteilhaften Ausführungsbeispielen ist das Ventilschließglied durch einen Hohlzylinder gebildet, dessen Hohlraum an einem Ende durch einen Boden geschlossen ist, an dem sich das eine Ende einer im Hohlraum befindlichen Druckfeder abstützt, deren anderes Ende sich am Deckelteil abstützt.

Hierbei kann mit besonderem Vorteil die Anordnung so getroffen sein, dass zur Bildung einer Art Ventilgehäuse für die Bypass-Ventileinrichtung am Deckelteil eine in Richtung des Filterelements vorspringende, kreiszylindrisch ausgebildete Führungswand vorgesehen ist, entlang deren der Hohlzylinder mit seiner Außenwand geführt ist.

Ferner kann die Anordnung mit Vorteil so getroffen sein, dass der Hohlzylinder an dem durch den Boden geschlossenen Ende außenseitig eine umlaufende Anlageschräge aufweist, die einen Ventilkegel bildet, der unter dem Einfluss der Druckfeder im normalen Filtrierbetrieb in dichtender Anlage mit dem Ventilsitzteil an der Elementkappe gehalten ist.

Bei besonders vorteilhaften Ausführungsbeispielen weist die Elementkappe des Filterelements an der Einfassung für das zugewandte Ende des Filtermaterials ein Aufnahmeteil in Form eines ebenflächigen Kreisringes auf, an dessen Innenumfang sich ein axial in die die Unfiltratseite bildende Innenseite des Filterelements erstreckendes Führungsteil anschließt, an dem das Ventilsitzteil gebildet ist.

Das Führungsteil kann in vorteilhafter Weise die Form eines hohlen Konus besitzen, der sich mit seinem eine Öffnung aufweisenden, verjüngten Ende in die Innenseite des Filterelements erstreckt und am Rand seiner Öffnung die Dichtkante des Ventilkegels bildet. Bei sich öffnendem Bypassventil verläuft so der Fluidweg durch den Hohlkonus zur Oberseite des Aufnahmeteils und über dieses hinweg zu der die Filtratseite bildenden Außenseite des Filtermaterials.

Zur Strukturverstärkung kann der Hohlkonus innenumfangsseitig einen Kranz vorstehender Führungsstege aufweisen.

Bei besonders vorteilhaften Ausführungsbeispielen umgibt den Außenumfang des kreisringförmigen Aufnahmeteils der Elementkappe der weitere Kranz aus gleichmäßig verteilten Stegen, die, als Fortsetzung der im Hohlkonus befindlichen Stege, plattenartig gebildet sind.

Die derart gebildete Aufnahmekrone kann an ihrem Außenumfang von einer Formdichtung umfasst sein, die einen U-förmigen Profilquerschnitt besitzt, dessen einer Profilschenkel die Abdichtung gegenüber dem Deckelteil und dessen Profilsteg und anderer Profilschenkel die Abdichtung zwischen Aufnahmekrone und Filterkopf bilden. In besonders vorteilhafter Weise ist dadurch durch eine einzige Dichtungsanordnung in Verbindung mit dem Bypassventil, das die in den Innenraum des Filterelements führende Öffnung der Elementkappe normalerweise verschließt, eine Gesamtabdichtung zwischen Unfiltratseite und Filtratseite gebildet.

Das Aufnahmeteil, die Stege, die Aufnahmekrone und das Führungsteil können in vorteilhafter Weise einstückig miteinander verbunden die Elementkappe ausbilden.

Als weitere Sicherheitseinrichtung, zusätzlich zu der Bypass-Ventileinrichtung, kann eine Differenzdruck-Messeinrichtung vorhanden sein, die vorzugsweise um eine optische Auswerteeinheit ergänzt ist und anhand des am Filtermaterial gebildeten Druckgefälles den Betriebszustand des Filtermaterials signalisiert.

Nachstehend ist die Erfindung anhand eines in der Zeichnung dargestellten Ausführungsbeispiels im Einzelnen erläutert. Es zeigen:
- Fig. 1: in schematisch vereinfachter perspektivischer Schrägansicht sowie in Längsrichtung aufgeschnitten und verkürzt ein Ausführungsbeispiel der erfindungsgemäßen Filtervorrichtung; und
- Fig. 2: in gegenüber Fig. 1 vergrößertem Maßstab, in Längsrichtung abgebrochen und gegenüber Fig. 1 um 90° verdreht, einen Längsschnitt des den Filterkopf aufweisenden Endbereichs des Ausführungsbeispiels.

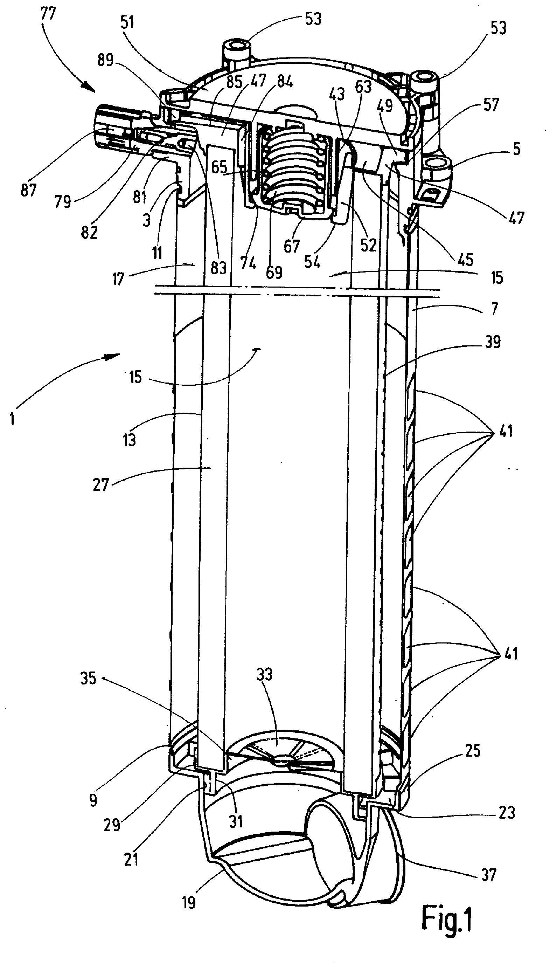

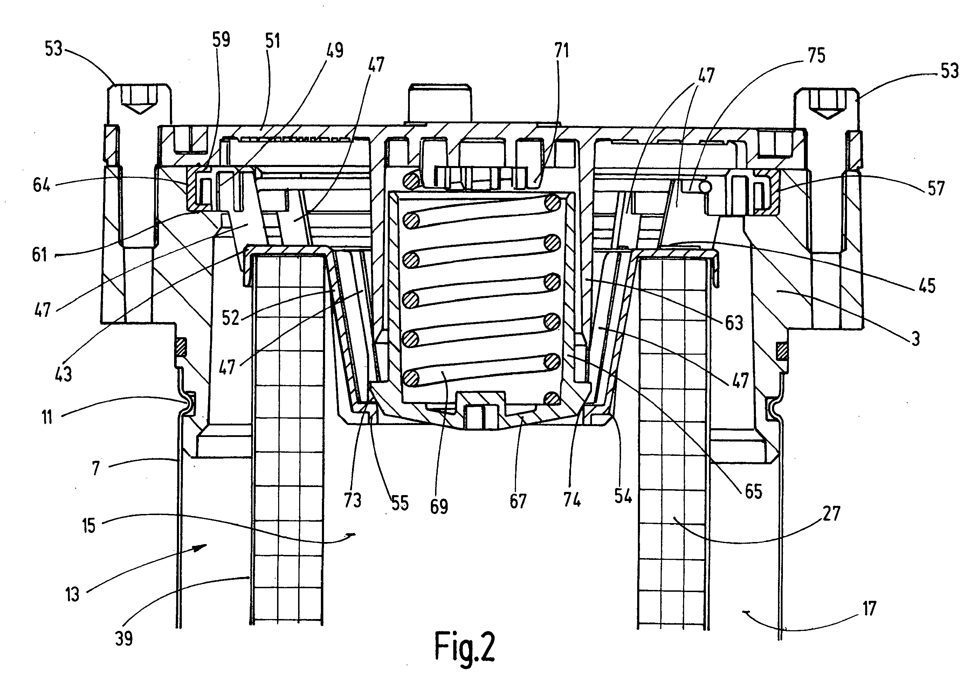

Mit Bezug auf die beigefügten Zeichnungen ist die Erfindung am Beispiel einer sog. In-Tank-Filtervorrichtung erläutert, bei der das Filtergehäuse 1 einen Filterkopf 3 aufweist, an dem sich außenseitig Flanschteile 5 befinden. Mit diesen ist das Filtergehäuse 1 am Rand einer oberen Wandöffnung eines Vorratsbehälters oder Tanks (nicht dargestellt) derart anbringbar, dass sich ein Filtertopf 7, der sich an das untere Ende des Filterkopfes 3 anschließt, in Vertikalrichtung ins Innere des Tanks erstreckt. Dabei ist die Länge des in Fig. 1 und 2 verkürzt dargestellten Filtertopfes 7 derart bemessen, dass sich das untere Ende 9 des Filtertopfes 7 unterhalb des niedrigsten, im Betrieb zu erwartenden Fluidniveaus, z.B. Hydrauliköl, befindet. Bei der Auslegung als In-Tank-Filtervorrichtung ist beim gezeigten Beispiel der Filtertopf 7 in Form eines verhältnismäßig dünnwandigen Kreiszylinders am Filterkopf 3 durch eine Einbördelung 11 festgelegt. Es versteht sich, dass die Erfindung nicht nur bei In-Tank-Filtervorrichtungen, sondern gleichermaßen auch bei andersartigen Filtervorrichtungen vorteilhaft anwendbar ist.

Für den Filtrierbetrieb, bei dem ein im Gehäuse 1 auswechselbar aufnehmbares Filterelement 13 von seiner die Unfiltratseite bildenden Innenseite 15 her zu seiner die Filtratseite bildenden Außenseite 17 hin durchströmbar ist, befindet sich am unteren Ende 9 des Filtertopfes 7 ein Einströmgehäuse 19, das an seiner zur Innenseite 15 des Filterelements 13 führenden oberen Öffnung 21 einen radial nach außen verlaufenden Boden 23 bildet, dessen Umfangsrand 25 in das untere Ende 9 des Filtertopfes 7 eingreift und verbördelt wird. Das Filterelement 13 weist am unteren Ende seines hohlzylinderförmigen Filtermaterials 27 eine Endkappe 29 auf, die mit einem endseitigen Ringkörper 31 in die Öffnung 21 des Einströmgehäuses 19 eingreift. Ein Klappenventil 33, das am zentralen Durchgang 35 der Endkappe 29 angeordnet ist, öffnet für die Strömung des Fluids, das vom Einlassanschluss 27 des Einströmgehäuses 19 zur Innenseite 15 des Filterelements 13 strömt.

Bei dem von innen nach außen durch das Filtermaterial 27 hindurch erfolgenden Filtriervorgang ist das Filtermaterial 27 gegen die Strömungskräfte durch eine äußere Umhüllung 39 abgestützt, die eine Perforation, beispielsweise in Form einer Lochung, aufweist und eine Art äußeres Stützrohr bildet. Anstelle einer Hülle mit Lochung könnte auch eine Gitterstruktur oder dergleichen vorgesehen sein. Für den Austritt des Filtrats aus der Außenseite 17 zum Tankinneren sind im Filtertopf 7 Fensteröffnungen 41 gebildet. Entsprechend dem bei In-Tank-Filtern üblichen Stand der Technik sind die Fensteröffnungen 41 nicht über die ganze Länge des Filtertopfes 7 angeordnet, sondern lediglich in ausgewählten Flächenbereichen. Beispielsweise können die Fensteröffnungen 41 entsprechend der diesbezüglich durch EP 2 249 941 B1 vermittelten Lehre in Anpassung an das betriebliche Fluidniveau des Tanks derart angeordnet sein, dass etwaig im gereinigten Fluid sich befindende Gasblasen abscheidbar und/oder für eine Abgabe ansammelbar sind.

Wie am deutlichsten aus Fig. 2 zu ersehen ist, weist das Filterelement 13 an seiner Oberseite, die einem Gehäuse-Deckelteil 51 zugewandt ist, das mittels Schrauben 53 abnehmbar am Filterkopf 3 anbringbar ist, eine speziell ausgebildete Elementkappe 43 auf, die aus einem Kunststoffwerkstoff spritzgeformt ist. Es besteht aber auch die Möglichkeit, die Elementkappe 43 aus Blech oder als Aluminium-Druckgussteil auszubilden. Als zentralen Bestandteil weist die Elementkappe 43 ein Aufnahmeteil 45 in Form eines ebenflächigen Kreisringes auf, das, wie bei Filterelement-Endkappen üblich, eine Einfassung für das zugewandte Ende des Filtermaterials 27 bildet. Den Außenumfang des Aufnahmeteils 45 umgibt ein Kranz aus gleichmäßig verteilten, plattenartigen Stegen 47, deren Ebenen sich in Radialrichtung erstrecken und die die Träger für eine kreisringförmige Aufnahmekrone 49 bilden, die sich in einem axialen Abstand vom Aufnahmeteil 45 sowie in einem radialen Abstand von der Außenseite des übrigen Filterelements 13 befindet. An der Unterseite des Aufnahmeteils 45 schließt sich an dessen Innenumfang ein Führungsteil 52 an, das die Form eines hohlen Konus besitzt, der sich mit seinem verjüngten Ende 54 axial in die Innenseite 15 des Filterelements 13 erstreckt und am unteren Rand in einer radial nach innen vorspringenden Rippe 55 endet. Die Stege 47 setzen sich unterhalb des Aufnahmeteils 45 entlang der Innenseite des Führungsteils 52 als weiterer Kranz der Stege 47 fort, die radial nach innen vorstehen und sich von der Unterseite des Aufnahmeteils 45 bis zur Rippe 55 am unteren Ende 54 des Führungsteils 52 erstrecken.

Wie die Fig. 2 am deutlichsten zeigt, ist der Umfangsrand der Aufnahmekrone 49 von einer Formdichtung 57 umgriffen, die einen U-förmigen Querschnitt besitzt und mit ihrem oberen Profilschenkel 59 die Abdichtung mit dem Deckelteil 51 bildet, während der untere Profilschenkel 61 sowie der zwischen den Schenkeln 59 und 61 verlaufende Profilsteg 64 die Abdichtung gegenüber dem Filtertopf 7 bilden. Die Formdichtung 57 bildet daher die Abdichtung des gesamten, sich oberhalb der Tankwand befindlichen Fluidsystems zur Umgebung hin.

An der Unterseite des Deckelteils 51 befindet sich eine Führungswand 63, die in Form eines Kreiszylinders koaxial in die Innenseite des vom Führungsteil 52 der Elementkappe 43 gebildeten Hohlkonus vorspringt. Die Führungswand 63 bildet eine Art Ventilgehäuse, in dem das Ventilschließglied der Bypass-Ventileinrichtung verschiebbar geführt ist. Dieses Ventilschließglied ist durch einen Hohlzylinder 65 gebildet, dessen Hohlraum an einem Ende durch einen Boden 67 geschlossen ist, an dem sich eine im Hohlraum angeordnete Druckfeder 69 abstützt, deren anderes Ende an einem Zapfen 71 zentriert ist, der vom Deckelteil 51 axial vorspringt. Der das Ventilschließglied bildende Hohlzylinder 65, der durch die Druckfeder 69 in die in Fig. 2 gezeigte Schließstellung vorgespannt ist, bildet an dem durch den Boden 67 geschlossenen Ende außenseitig eine umlaufende Anlageschräge, die einen Ventilkegel 73 bildet, der unter dem Einfluss der Druckfeder 69 im normalen Filtrierbetrieb in dichtender Anlage mit dem Ventilsitzteil ist, das durch eine Dichtkante 74 am Innenrand der Rippe 55 des Führungsteils 52 gebildet ist. Bei einem Verblocken des Filtermaterials 27 des Filterelements 13 und entsprechendem Druckanstieg in der die Unfiltratseite bildenden Innenseite 15 und dem dadurch bewirkten Abheben des Ventilkegels 73, ist ein Bypass-Fluidweg innerhalb des Führungsteils 52 entlang der Stege 47 zur Oberseite des Aufnahmeteils 45 gebildet und damit über das Aufnahmeteil 45 hinweg zur Außenseite der Filtratseite hin, die sich an der Außenseite 17 des Filtermaterials 27 befindet.

Vervollständigt wird die Elementkappe 43, die einschließlich des Aufnahmeteils 45, der Stege 47, der Aufnahmekrone 49 und des Führungsteils 52 einstückig ausgebildet ist, durch einen Haltebügel 75, der klappbar am Kranz der Stege 47 verankert ist und die Handhabung des Filterelements 13 bei Ein- und Ausbau erleichtert. Weiterhin ist eine Differenzdruck-Messeinrichtung 77 vorhanden, die aufgrund des im Filtrierbetrieb aufgrund des am Filtermaterial 27 entstehenden Druckgefälles eine Anzeige für den Betriebszustand des Filterelements 13 liefert. Die Messeinrichtung 77 weist ein Messgehäuse 79 auf, das in einem Anschlussbereich 81 in die Wand des Filterkopfes 3 eingeschraubt ist. Im Messgehäuse 79 befindet sich ein federbelasteter Messkolben 82, dessen eine Stirnseite vom Momentandruck der Unfiltratseite und dessen andere Stirnseite vom Momentandruck der Filtratseite beaufschlagt ist. Für die Zufuhr des Momentandrucks der Filtratseite weist das Messgehäuse 79 an dem an die Außenseite (Filtratseite) angrenzenden Ende einen Durchgang 83 auf. Der Druck der Unfiltratseite gelangt aus der Innenseite 15 über eine Kanalführung zum Messgehäuse 79, die an der Elementkappe 43 einen vertikalen Kanalabschnitt 84, der entlang eines Steges 47 verläuft, und einen horizontalen Kanalabschnitt 85 aufweist, der zu einem zwischen Deckelteil 51 und Filterkopf 3 gebildeten Raum 89 führt, von wo er über eine Wandöffnung in das Messgehäuse 79 gelangt. Um eine Anzeige für die dem Differenzdruck entsprechende Kolbenstellung des Messkolbens 82 zu erhalten, schließt sich am äußeren Ende des Messgehäuses 79 eine Auswerteeinheit 87 an, die beispielsweise eine optische Signalgabe liefert.

Die Aufnahmekrone 49 ist bis zur Rippe 55, die eine Dichtkante ausbildet, als ein Bauteil konzipiert, das bevorzugt Bestandteil des Filterelementes als Ganzes ist. Dadurch dass das genannte Bauteil 49 bis zur Dichtkante 55 als ein zusammenhängendes Bauteil konzipiert ist, stellt sich trotz etwaig vorhandener Fertigungstoleranzen am Filterelement selbst oder sonstiger weiterer Bauteile immer derselbe Öffnungsdruck am Bypassventil ein, was ein großer Vorteil gegenüber sonstigen Lösungen ist. Ansonsten lässt sich das Aufnahmegehäuse für das Bypassventil bis auf den vorstehend genannten Bereich auch mehrteilig konzipieren.

## Patentansprüche

1. Filtervorrichtung, mit einem einen Filterkopf (3), einen Filtertopf (7) und ein abnehmbares Gehäuse-Deckelteil (51) aufweisenden Filtergehäuse (1), das ein Filterelement (13) aufnimmt, das eine Unfiltratseite (15) von einer Filtratseite (17) separiert, und mit einer Bypass-Ventileinrichtung, die ein Ventilschließglied (65) aufweist, das durch eine Schließfeder (69) in eine an einem Ventilsitzteil (74) anliegende Schließstellung vorgespannt ist und bei verblocktem Filterelement (13) in eine Stellung gelangt, in der es unter Umgehung des Filterelements (13) einen Fluidweg von der Unfiltratseite (15) zur Filtratseite (17) freigibt, wobei das Ventilschließglied (65) und die Schließfeder (69) am Deckelteil (51) angeordnet sind und das Ventilsitzteil (74) sich an einer Elementkappe (43) des Filterelements (13) befindet, die ein eine Einfassung für das dem Deckelteil (51) zugewandte Ende des Filtermaterials (27) des Filterelements (13) bildendes Aufnahmeteil (45) aufweist, **dadurch gekennzeichnet, dass** den Außenumfang des kreisringförmigen Aufnahmeteils (45) der Elementkappe (43) ein Kranz aus gleichmäßig verteilten Stegen (47) umgibt, die plattenartig gebildet sind und sich mit ihren Ebenen in Radialrichtung erstrecken und die Träger für eine kreisringförmige Aufnahmekrone (49) bilden, die sich in einem axialen Abstand vom Aufnahmeteil (45) sowie in einem radialen Abstand von der Außenseite des übrigen Filterelements (13) befindet.

2. Filtervorrichtung nach Anspruch 1, **dadurch gekennzeichnet, dass** das Ventilschließglied (65) durch einen Hohlzylinder gebildet ist, dessen Hohlraum an einem Ende durch einen Boden (67) geschlossen ist, an dem sich das eine Ende einer im Hohlraum befindlichen Druckfeder (69) abstützt, deren anderes Ende sich am Deckelteil (51) abstützt.

3. Filtervorrichtung nach Anspruch 2, **dadurch gekennzeichnet, dass** das Deckelteil (51) in Richtung des Filterelements (13) vorspringend eine kreiszylindrisch ausgebildete Führungswand (63) aufweist, entlang deren der Hohlzylinder des Ventilschließgliedes (65) mit seiner Außenwand geführt ist.

4. Filtervorrichtung nach Anspruch 2 oder 3, **dadurch gekennzeichnet, dass** der Hohlzylinder des Ventilschließgliedes (65) an dem durch den Boden (67) geschlossenen Ende außenseitig eine umlaufende Anlageschräge aufweist, die einen Ventilkegel (73) bildet, der unter dem Einfluss der Druckfeder (69) im normalen Filtrierbetrieb in dichtender Anlage mit dem Ventilsitzteil (74) an der Elementkappe (43) gehalten ist.

5. Filtervorrichtung nach einem der vorstehenden Ansprüche, **dadurch gekennzeichnet, dass** die Elementkappe (43) des Filterelements (13) an der Einfassung für das zugewandte Ende des Filtermaterials (27) ein Aufnahmeteil (45) in Form eines ebenflächigen Kreisringes aufweist, an dessen Innenumfang sich ein axial in die die Unfiltratseite bildende Innenseite (15) des Filterelements (13) erstreckendes Führungsteil (52) anschließt, an dem das Ventilsitzteil (74) gebildet ist.

6. Filtervorrichtung nach einem der vorstehenden Ansprüche, **dadurch gekennzeichnet, dass** das Führungsteil (52) die Form eines hohlen Konus besitzt, der sich mit seinem eine Öffnung aufweisenden verjüngten Ende (54) in die Innenseite (15) des Filterelements (13) erstreckt und am Rand (55) seiner Öffnung die Dichtkante (74) des Ventilschließglieds bildet.

7. Filtervorrichtung nach Anspruch 6, **dadurch gekennzeichnet, dass** der Hohlkonus des Führungsteils (52) innenumfangsseitig einen Kranz vorstehender Führungsstege (47) aufweist.

8. Filtervorrichtung nach einem der vorstehenden Ansprüche, **dadurch gekennzeichnet, dass** den Außenumfang des kreisringförmigen Aufnahmeteils (45) der Elementkappe (43) der weitere Kranz aus gleichmäßig verteilten Stegen (47) umgibt, die als Fortsetzung der im Hohlkonus (65) befindlichen Stege (47), plattenartig gebildet sind.

9. Filtervorrichtung nach einem der vorstehenden Ansprüche, **dadurch gekennzeichnet, dass** die Aufnahmekrone (49) an ihrem Außenumfang von einer Formdichtung (57) umfasst ist, die einen U-förmigen Profilquerschnitt besitzt, dessen einer Profilschenkel (59) die Abdichtung gegenüber dem Deckelteil (51) und dessen Profilsteg (64) und anderer Profilschenkel (61) die Abdichtung zwischen Aufnahmekrone (49) und Filterkopf (3) bilden.

10. Filtervorrichtung nach Anspruch 7 bis 9, **dadurch gekennzeichnet, dass** das Aufnahmeteil (45), die Stege (47), die Aufnahmekrone (49) und das Führungsteil (52) einstückig miteinander verbunden die Elementkappe (43) ausbilden.

11. Filtervorrichtung nach einem der vorstehenden Ansprüche, **dadurch gekennzeichnet, dass** eine Differenzdruck-Messeinrichtung (77) vorhanden ist, die vorzugsweise um eine optische Auswerteeinheit (87) ergänzt ist.

## Claims

1. Filter apparatus, with a filter housing (1) comprising a filter head (3), a filter bowl (7) and a removable housing lid part (51), said filter housing receiving a filter element (13), which separates an unfiltered medium side (15) from a filtrate side (17), and with a bypass valve device that comprises a valve closing element (65), which is preloaded by a closing spring (69) into a closing position lying on a valve seat part (74) and, if the filter element (13) is blocked, moves into a position in which it releases a fluid channel from the unfiltered medium side (15) to the filtrate side (17), bypassing the filter element (13), the valve closing element (65) and the closing spring (69) being arranged on the lid part (51) and the valve seat part (74) being located on an element cap (43) of the filter element (13), said cap comprising a receiving part (45) forming an edging for the end, facing the lid part (51), of the filter material (27) of the filter element (13), **characterised in that** a ring made from uniformly distributed webs (47) surrounds the outer circumference of the circular ring-shaped receiving part (45) of the element cap (43), said webs being in the form of plates and extending with their flat surfaces in the radial direction and forming the supports for a circular ring-shaped receiving crown (49), which is located at an axial distance from the receiving part (45) and at a radial distance from the outside of the remaining filter element (13).

2. Filter apparatus according to claim 1, **characterised in that** the valve closing element (65) is formed by a hollow cylinder, the cavity of which is closed at one end by a base (67), on which one end of a compression spring (69) located in the cavity is supported, the other end of said spring being supported on the lid part (51).

3. Filter apparatus according to claim 2, **characterised in that** the lid part (51) comprises a circular-cylindrical-shaped guide wall (63) protruding in the direction of the filter element (13), the outer wall of the hollow cylinder of the valve closing element (65) being guided along said guide wall.

4. Filter apparatus according to either claim 2 or claim 3, **characterised in that** the outside of the hollow cylinder of the valve closing element (65) comprises a peripheral contact slope at the end closed by the base (67), said slope forming a valve plug (73), which, under the influence of the compression spring (69), is held in sealing contact with the valve seat part (74) on the element cap (43) during normal filtration operation.

5. Filter apparatus according to any one of the preceding claims, **characterised in that** the element cap (43) of the filter element (13) comprises a receiving part (45) in the form of a flat circular ring at the edging for the facing end of the filter material (27), a guide part (52) extending axially into the inside (15), forming the unfiltered medium side, of the filter element (13) on the inner circumference of said flat circular ring, the valve seat part (74) being formed on said guide part.

6. Filter apparatus according to any one of the preceding claims, **characterised in that** the guide part (52) takes the form of a hollow cone, the tapered end (54) of which has an opening and extends into the inside (15) of the filter element (13) and forms the seal face (74) of the valve closing element at the edge (55) of the opening thereof.

7. Filter apparatus according to claim 6, **characterised in that** the hollow cone of the guide part (52) comprises a ring of protruding guide webs (47) on its inner circumference.

8. Filter apparatus according to any one of the preceding claims, **characterised in that** the further ring of uniformly distributed webs (47) surrounds the outer circumference of the circular ring-shaped receiving part (45) of the element cap (43), said webs being in the form of plates as a continuation of the webs (47) located in the hollow cone (65).

9. Filter apparatus according to any one of the preceding claims, **characterised in that** the receiving crown (49) is surrounded on its outer circumference by a moulded seal (57), which has a U-shaped profile cross-section, one profile leg (59) thereof forming the seal from the lid part (51), and the profile web (64) and the other profile leg (61) thereof forming the seal between the receiving crown (49) and the filter head (3).

10. Filter apparatus according to claim 7 to 9, **characterised in that** the receiving part (45), webs (47), receiving crown (49) and guide part (52) are connected together in one piece to form the element cap (43).

11. Filter apparatus according to any one of the preceding claims, **characterised in that** a differential pressure measurement device (77) is provided, said device preferably also having an optical evaluation unit (87).

## Revendications

1. Dispositif de filtration, comprenant une tête (3) de filtre, une enveloppe (1) de filtre ayant un pot (7) de filtre et une partie (51) de couvercle d'enveloppe, qui peut être retirée, l'enveloppe (1) recevant un élément (13) filtrant, qui sépare un côté (15) de non filtrat d'un côté (17) de filtrat, et comprenant un dispositif de soupape de dérivation, qui a un élément (65) de fermeture de la soupape, qui est précontraint par un ressort (69) de fermeture dans une position de fermeture s'appliquant à une partie (74) formant siège de soupape et qui, lorsque l'élément (13) filtrant est bloqué, vient dans une position, dans laquelle, en contournant l'élément (13) filtrant, il dégage un trajet de fluide du côté (15) de non filtrat ou du côté (17) de filtrat, dans lequel l'élément (65) de fermeture de la soupape et le ressort (69) de fermeture sont montés sur la partie (51) formant couvercle et la partie (74) formant siège de la soupape se trouve sur une coiffe (43) de l'élément (13) filtrant, coiffe qui a une partie (45) de réception formant une bordure pour l'extrémité, tournée vers la partie (51) formant couvercle, de la matière (27) filtrante de l'élément (13) filtrant, **caractérisé en ce qu'**une couronne composée d'entretoises (47) réparties d'une manière uniforme entoure le pourtour extérieur de la partie (45) de réception en forme d'anneau de cercle de la coiffe (43) de l'élément, ces entretoises étant formées à la manière de plaques et s'étendant par leurs plans dans la direction radiale et qui forment des supports d'un couronnement (49) de réception en forme d'anneau de cercle, qui se trouve à distance axiale de la partie (45) de réception ainsi qu'à distance radiale du côté extérieur du reste de l'élément (13) filtrant.

2. Dispositif de filtration suivant la revendication 1, **caractérisé en ce que** l'élément (65) de fermeture de la soupape est formé d'un cylindre creux, dont la cavité est fermée à une extrémité par un fond (67), sur lequel s'appuie l'une des extrémités d'un ressort (69) de compression se trouvant dans la cavité, tandis que l'autre extrémité s'appuie sur la partie (51) formant couvercle.

3. Dispositif de filtration suivant la revendication 2, **caractérisé en ce que** la partie (51) formant couvercle a, faisant saillie dans la direction de l'élément (13) filtrant, une paroi (63) de guidage de constitution cylindrique de section droite circulaire, le long de laquelle le cylindre creux de l'élément (65) de fermeture de la soupape est guidé par sa paroi extérieure.

4. Dispositif de filtration suivant la revendication 2 ou 3, **caractérisé en ce que** le cylindre creux de l'élément (65) de fermeture de la soupape a, à l'extrémité fermée par le fond (67) du côté extérieur, un biseau de contact faisant le tour, qui forme un cône (73) de la soupape qui, sous l'influence du ressort (69) de compression dans le fonctionnement normal de filtration, est maintenu en contact étanche avec la partie (74) formant siège de la soupape de la coiffe (43) de l'élément.

5. Dispositif de filtration suivant l'une des revendications précédentes, **caractérisé en ce que** la coiffe (43) de l'élément (13) filtrant a, sur la bordure de l'extrémité de la matière (27) filtrante, une partie (45) de réception sous la forme d'un anneau de cercle à surface plane, au pourtour intérieur duquel se raccorde une partie (52) de guidage, qui s'étend axialement dans le côté (15) intérieur, formant le côté de non filtrat, de l'élément (13) filtrant et sur laquelle est formée la partie (74) formant siège de la soupape.

6. Dispositif de filtration suivant l'une des revendications précédentes, **caractérisé en ce que** la partie (52) de guidage possède la forme d'un cône creux, qui s'étend par son extrémité (54) ayant une ouverture dans le côté (15) intérieur de l'élément (13) filtrant et qui forme, au bord (55) de son ouverture, l'arête (74) d'étanchéité de l'élément de fermeture de la soupape.

7. Dispositif de filtration suivant la revendication 6, **caractérisé en ce que** le cône creux de la partie (52) de guidage a, du côté du pourtour extérieur, des entretoises (47) de guidage en saillie d'une couronne.

8. Dispositif de filtration suivant l'une des revendications précédentes, **caractérisé en ce que** l'autre couronne en entretoises (47) réparties de manière uniforme, qui sont formées à la manière plaques en tant que prolongement des entretoises (47) se trouvant dans le cône (65) creux, entoure le pourtour extérieur de la partie (45) de réception en forme d'anneau de cercle de la coiffe (43) de l'élément.

9. Dispositif de filtration suivant l'une des revendications précédentes, **caractérisé en ce que** le couronnement (49) de réception est entouré sur son pourtour extérieur d'un joint (57) moulé, qui a une section transversale profilée en forme de U, dont une branche (59) du profil forme l'étanchéité contre la partie (51) formant couvercle et son entretoise (64) profilée et dont l'autre branche (61) du profil forme l'étanchéité entre le couronnement (49) de réception et la tête (3) du filtre.

10. Dispositif de filtration suivant la revendication 7 à 9, **caractérisé en ce que** la partie (45) de réception, les entretoises (47), le couronnement (49) de réception et la partie (52) de guidage, reliés entre eux, constituent la coiffe (43) de l'élément.

11. Dispositif de filtration suivant l'une des revendications précédentes, **caractérisé en ce qu'**il y a un dispositif (77) de mesure de la différence de pression, qui est complété de préférence par une unité (87) optique d'analyse.
